# FASCICULE DE BREVET EUROPEEN

(11) **EP 0 913 645 B1**
(45) Date de publication et mention de la délivrance du brevet: **07.01.2004**
(21) Numéro de dépôt: 98402697.1
(22) Date de dépôt: 29.10.1998
(51) Int. Cl.: F23R 3/04, F23R 3/06, F23R 3/34

(54) **Chambre de combustion pour turbomachine**
Brennkammer für eine Turbomaschine
Combustion chamber for a turbo-machine

(30) Priorité: 29.10.1997 FR 9713549
(43) Date de publication de la demande: 06.05.1999
(73) Titulaire: Snecma Moteurs, 75015 Paris (FR)
(72) Inventeur: Ansart, Denis Roger Henri, 77590 Bois le Roi (FR); James, Bruno, 77300 Fontainebleau (FR); Desaulty, Michel André Albert, 77240 Vert Saint Denis (FR); Staessen, Richard Emile, 77930 Chailly en Biere (FR)

(56) Documents cités:
- EP-A- 0 488 557
- EP-A- 0 491 478
- US-A- 5 284 019

## Description

Un des objectifs prioritaires dans le domaine des turbomachines utilisées dans l'aéronautique, surtout à usage civil mais aussi militaire, est la lutte contre la pollution atmosphérique et notamment la lutte contre l'émission des oxydes d'azote.

La production des oxydes d'azote est fonction de la richesse, des températures, du taux de compression et de la durée de la combustion. Elle se produit notamment dans les zones de la chambre de combustion où la richesse est voisine du rapport stoechiométrique et est d'autant plus importante que la température et le taux de compression sont élevés. Aussi, convient-il de diminuer le temps du séjour dans ces zones critiques ou de diminuer leur importance.

Le problème est d'autant plus difficile à résoudre que les turbomachines d'aviation sont soumises à plusieurs régimes de vol, notamment à un régime de ralenti et à un régime plein gaz au décollage de l'avion.

Il a déjà été proposé, dans FR 2 691 235, FR 2 706 021 et FR 2 686 683, des chambres de combustion dans lesquelles les injecteurs de carburant sont répartis en deux groupes, les injecteurs de l'un des groupes étant destinés à l'alimentation en carburant lors d'un premier mode de fonctionnement, tel que le régime de ralenti, et les injecteurs de l'autre groupe étant destinés à l'alimentation en carburant lors d'un deuxième mode de fonctionnement, tel que le régime de plein gaz. Dans ces chambres de combustion, les deux groupes d'injecteurs sont disposés concentriquement dans le fond de la chambre et sont séparés physiquement par des plaques séparatrices qui s'étendent vers l'intérieur de la chambre, afin de définir deux sections de longueur différente dans l'enceinte de combustion, la section la plus courte étant utilisée au régime plein gaz. Ces chambres de combustion, dites à double tête, sont complexes et lourdes pour une poussée maximale donnée, du fait que les injecteurs de l'une des têtes sont hors fonctionnement pendant une partie du vol et au cours du décollage. De plus dans ce type de chambre, les plaques séparatrices doivent supporter des sollicitation mécaniques et thermiques très importantes et souvent dissymétriques. Elles sont par le fait même difficiles à concevoir et à fabriquer.

US-A-5 284 019 montre un autre exemple de chambre de combustion à double tête où les parois externe et interne comportent des trous de dilution. De l'air est introduit à travers un séparateur axial formant mélangeur et disposé entre les deux rangées d'injecteurs.

La présente invention propose une autre solution, plus simple que les précédentes et qui possède d'autres avantages pour diminuer les émissions d'oxydes d'azote.

L'invention concerne donc une chambre de combustion comportant deux parois annulaires mutuellement écartées, réunies en amont par un fond et délimitant avec celui-ci une enceinte de combustion, un axe de sensible symétrie desdites parois annulaires, des injecteurs de carburant disposés dans des orifices ménagés dans le fond, lesdits injecteurs étant alimentés en carburant de façon permanente lors du fonctionnement de ladite chambre de combustion, des passages d'admission d'un air complémentaire ménagés dans ledit fond, des trous primaires ménagés dans lesdites parois et destinés à introduire un débit d'air dans la zone primaire de l'enceinte, des trous de dilution ménagés dans lesdites parois en aval des trous primaires et destinés à introduire de l'air dans la zone de dilution de l'enceinte, et des orifices de refroidissement des parois de la zone de dilution, lesdites parois définissant en aval une sortie annulaire pour l'évacuation des gaz de combustion hors de ladite enceinte.

Cette chambre de combustion est caractérisée par l'ensemble des dispositions suivantes :
a) les injecteurs de carburant sont répartis en deux rangées concentriques autour de l'axe de symétrie ;
b) lesdites deux rangées comportent le même nombre N d'injecteurs régulièrement répartis autour de l'axe de symétrie ;
c) les injecteurs de la rangée externe sont situés dans les mêmes plans longitudinaux passant par l'axe de symétrie que les injecteurs de la rangée interne ;
d) les injecteurs de la rangée interne et les injecteurs de la rangée externe sont sensiblement équidistants de la sortie de l'enceinte et leurs axes sont dirigés vers ladite sortie ;
e) les injecteurs sont du type aéromécanique et équipés de bols;
f) les passages d'admission d'air complémentaire sont répartis en un groupe interne situé entre la paroi annulaire interne et les bols des injecteurs de la rangée interne, un groupe externe situé entre la paroi annulaire externe et les bols des injecteurs de la rangée externe et un groupe médian situé entre les bols des injecteurs de la rangée interne et les bols des injecteurs de la rangée externe.

Les avantageuses dispositions suivantes sont en outre adoptées:

En fonctionnement, les proportions d'air injecté sont sensiblement de 26% au niveau des injecteurs, 7,5% par les passages, 22,3% par les trous primaires, 24,7% par les trous de dilution et 19,5% par les orifices de refroidissement, par rapport au débit total de l'air injecté dans l'enceinte.

Les deux rangées d'injecteurs introduisent sensiblement la même quantité d'air et de carburant.

La proportion d'air injecté par les passages est répartie de la manière suivante : sensiblement 1,6% du débit total est introduit par le groupe interne de passage, 3,5% par le groupe médian et 2,4% par le groupe externe.

Le nombre de trous de dilution est égal au double du nombre de trous primaires.

Le nombre de trous primaires par virole est égal au double du nombre d'injecteurs de chaque rangée d'injecteurs.

Les trous de dilution ménagés dans une paroi annulaire sont situés dans un plan transversal écarté du plan transversal contenant les trous primaires de la même paroi, d'une distance d inférieure à la distance D séparant deux trous primaires adjacents.

Si L indique la longueur de l'enceinte et H son épaisseur radiale maximale, le rapport de la longueur L sur l'épaisseur H est supérieur ou égal à 1,2.

D'autres avantages et caractéristiques de l'invention ressortiront à la lecture de la description suivante faite à titre d'exemple et en référence aux dessins annexés dans lesquels :
la figure 1 est une coupe axiale d'une chambre de combustion conforme à l'invention ;
la figure 2 est une vue selon la flèche F de la figure 1 qui montre la disposition des injecteurs dans le fond de chambre ;
la figure 3 est une coupe axiale schématique de la chambre de combustion de la figure 1, qui monte la répartition optimale des débits d'air introduits dans l'enceinte de la chambre de combustion par les divers orifices, et
la figure 4 est une vue développée des parois interne et externe de la chambre de combustion de la figure 1 dans la région des trous primaires et de dilution.

La chambre de combustion de turbine à gaz représentée sur les dessins comporte une paroi annulaire interne 1 d'axe 2, une paroi annulaire externe 3 d'axe 2 et un fond 4 qui délimite avec ces deux parois annulaires 1 et 3 une enceinte de combustion 5 qui comporte aux extrémités des parois 1 et 3 éloignées du fond 4 une sortie 6 annulaire, d'axe 2, pour l'évacuation des gaz de combustion vers une turbine disposée en aval de l'enceinte de combustion 5. Cette dernière est placée dans un espace 7 délimité par une enveloppe interne 8 et une enveloppe externe 9 annulaires, d'axe 2, et dans lequel est admis (flèche G) un comburant sous pression, généralement de l'air mis sous pression par un compresseur entraîné par la turbine.

Le fond 4 présente une pluralité d'orifices 10 dans chacun desquels est disposé un injecteur de carburant 11 du type aéromécanique associé à une vrille 12 pour l'introduction d'un débit d'air participant à la vaporisation et à la pulvérisation du carburant et à un bol 13 évasé vers la sortie 6 et faisant partie du fond 4 de la chambre de combustion.

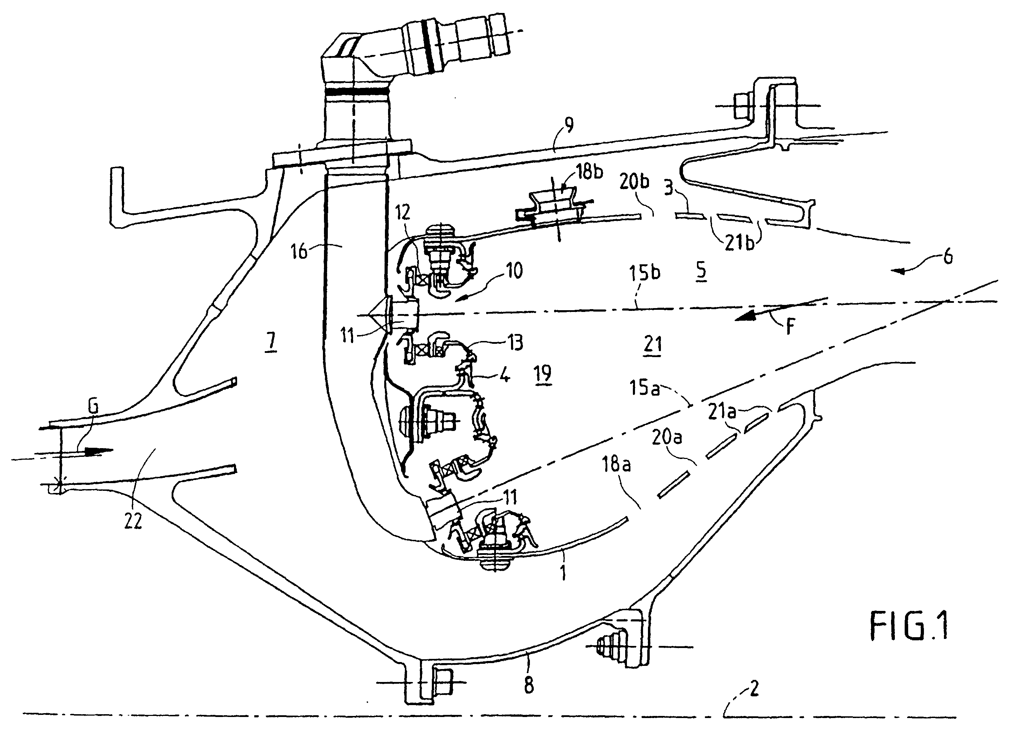

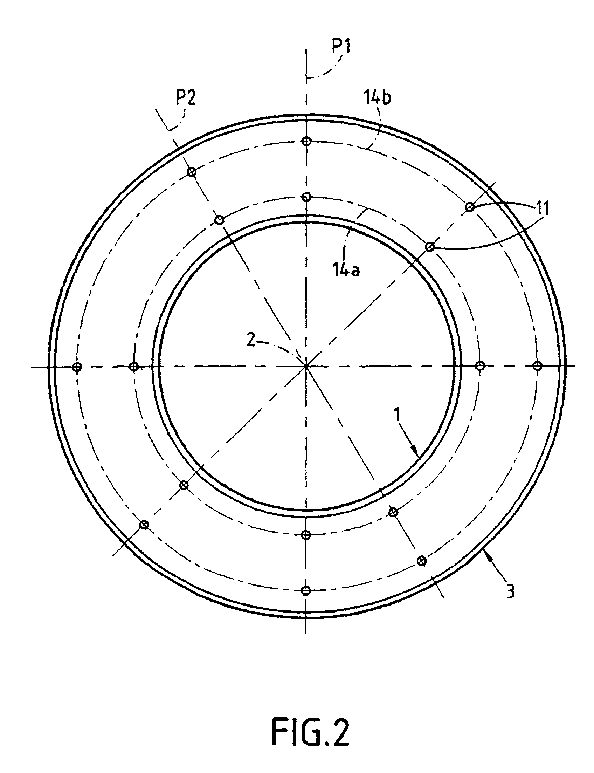

Comme on le voit clairement sur les figures 1 et 2, les injecteurs de carburant 11 sont répartis en deux rangées concentriques 14a, 14b, d'axe 2.

Les deux rangées d'injecteurs 14a, 14b comportent le même nombre N d'injecteurs régulièrement répartis circonférentiellement autour de l'axe 2 et dans des mêmes plan longitudinaux P₁, P₂, contenant l'axe 2. Les axes 15a des injecteurs de la rangée interne 14a sont dirigés vers la sortie 6 de l'enceinte 5, et les axes 15b des injecteurs de la rangée externe 14b sont également dirigés vers la sortie 6, de telle manière que les axes 15a, 15b de deux injecteurs superposés 11 se coupent sensiblement dans la région de la sortie 6. Les deux injecteurs superposés sont reliées à une même rampe 16 contenant du carburant.

Selon une caractéristique de la chambre de combustion selon la présente invention, les injecteurs 11 des deux rangées 14a, 14b sont sensiblement équidistants de la sortie 6 et sont alimentés en même temps et en permanence lors du fonctionnement. En outre, il n'est pas prévu de plaques séparatrices entre les deux rangées 14a, 14b d'injecteurs.

En plus des vrilles 12 pour l'introduction de l'air dans l'enceinte de combustion, il est prévu, dans le fond 4, des passages pour l'introduction d'un air complémentaire. Ces passages sont répartis en trois groupes : un groupe interne de passage 17a situé entre la paroi annulaire interne 1 et les bols des injecteurs de la rangée interne 14a, un groupe externe de passages 17b situé entre la paroi annulaire externe 3 et les bols des injecteurs de la rangée externe 14a, et un groupe médian de passage 17c situé entre les bols des injecteurs de la rangée interne 14a et les bols des injecteurs de la rangées externe 14b.

Les parois interne 1 et externe 3 comportent en outre des trous primaires 18a, 18b pour l'introduction d'un débit d'air dans la zone primaire 19 de l'enceinte 5 qui sont régulièrement répartis dans des plans transversaux P₃, P₄ perpendiculaires à l'axe de symétrie 2, et des trous de dilution 20a, 20b pour l'introduction d'un débit d'air de dilution dans la zone de dilution 21 de l'enceinte 5 qui sont régulièrement répartis dans des plans transversaux P₅, P₆ perpendiculaires à l'axe de symétrie 2.

Le nombre de trous primaires 18a, 18b dans chacune des parois 1 et 3 est égal au double du nombre d'injecteurs N de chaque rangée d'injecteurs 14a, 14b, tandis que le nombre de trous de dilution 20a, 20b est égal au double du nombre de trous primaires.

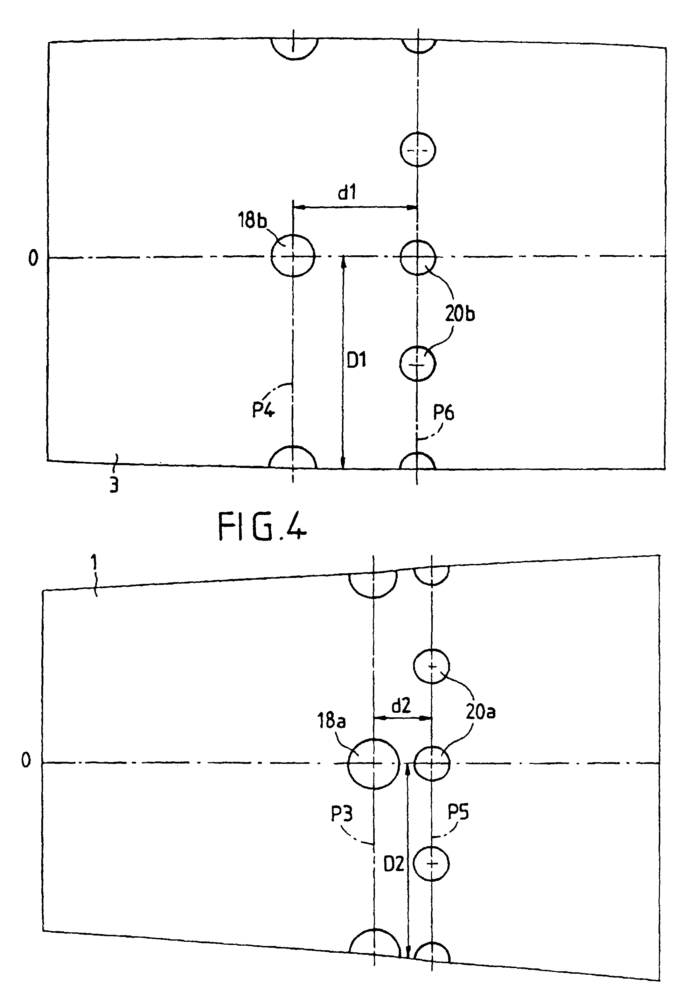

Ainsi que cela est montré sur la figure 4, la distance d₁ qui sépare les deux plans P₄, et P₆ est inférieure à la distance D₁ de deux trous primaires consécutifs 18b de la paroi externe 3. De même, la distance d₂ qui sépare les deux plans P₃ et P₅ est inférieure à la distance D₂ de deux trous primaires consécutifs 18a de la paroi interne 1. D'autre part, cette distance d₂ est inférieure à la distance d₁ et sensiblement égale à la moitié de cette dernière.

En aval des trous de dilution 20a, 20b, les parois interne 1 et externe 3 comportent en outre des orifices de refroidissement 21a, 21b pour l'introduction d'un air de refroidissement de ces parois.

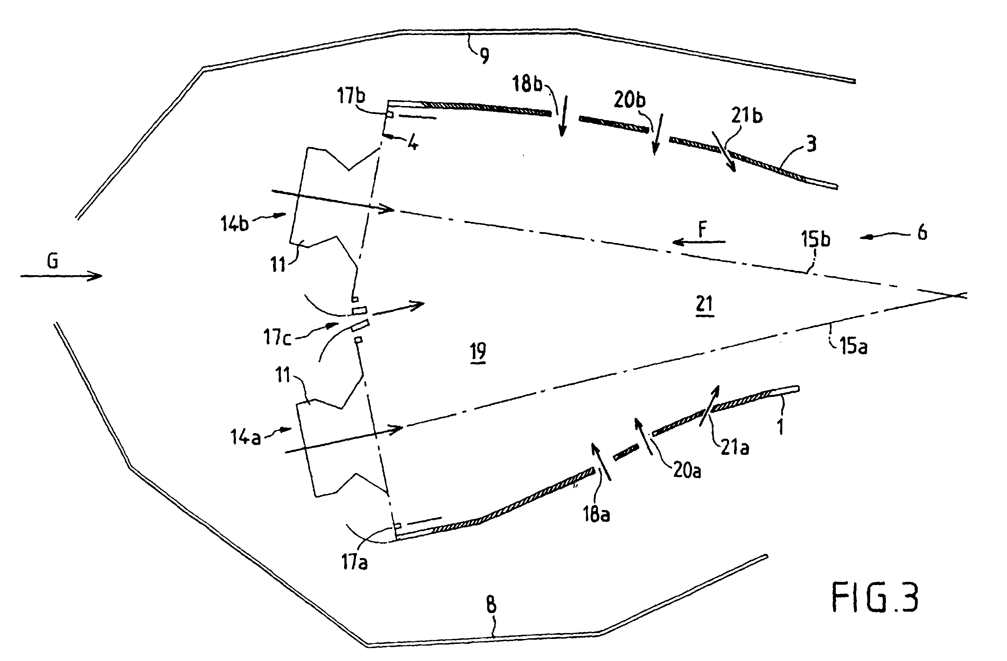

Le débit d'air G introduit dans l'espace 7 alimente l'enceinte de combustion 5 selon la répartition suivante montrée sur la figure 3.

Environ 13% du débit G est introduit à travers les injecteurs 11 de chaque rangée 14a, 14b.

Environ 7,5% du débit G est introduit à travers les passages 17a, 17b, 17c, à raison de 1,6% par le groupe de passages internes 17a, de 2,4% par le groupe de passages externes 17b et de 3,5% par le groupe de passages médians 17c.

Environ 10,2% du débit G est introduit par les trous primaires 18a, et 12,1% par les trous primaires 18b.

Environ 11,8% du débit G est introduit par les trous de dilution 20a de la paroi interne 1 et 12,9% par les trous de dilution 20b de la paroi externe 3.

Enfin, environ 9,2% est introduit par les orifices de refroidissement 21a et 10,3% par les orifices de refroidissement 21b.

Cette répartition du débit d'air permet d'obtenir un rapport d'équivalence de l'injecteur à 1,8 au plein gaz et un rapport d'équivalence en zone primaire inférieur à 0,86 avec une richesse dans l'enceinte au plein gaz de 32,6%o, sachant que le rapport d'équivalence est le rapport de la richesse dans la zone par rapport à la richesse stoechiométrique, la richesse dans la zone étant le rapport entre le débit de carburant et le débit d'air dans la zone.

Les calculs ont vérifié que c'est le type de répartition proposé qui permet de réduire au minimum les émissions d'oxydes d'azote, et ce d'autant mieux que les trous de dilution 20a, 20b ont été rapprochés des trous primaires 18a, 18b.

Si maintenant on considère l'architecture globale de la chambre de combustion, et si on désigne par L la longueur de l'enceinte 5 et par H son épaisseur radiale maximale, on constate que l'absence d'un séparateur entre les deux rangées d'injecteurs 14a, 14b, autorise le rapprochement des têtes externe et interne, ce qui permet d'obtenir un rapport entre la longueur L et son épaisseur radiale H supérieur ou égal à 1,2 alors qu'il est de 1 sur les chambres annulaires à double tête traditionnelles. Dans ces conditions, on peut alimenter la chambre en air avec un diffuseur simple flux 22 sans augmenter la perte de charge à son contournement.

Enfin, l'inclinaison des axes 15a des injecteurs 11 de la rangée interne 14a parallèlement à la ligne moyenne de la paroi interne 1 améliore le niveau des contraintes thermiques de cette paroi tout en rendant toujours possible la mise en place et le démontage des injecteurs 11.

## Revendications

1. Chambre de combustion comportant deux parois annulaires (1, 3) mutuellement écartées, réunies en amont par un fond (4) et délimitant avec celui-ci une enceinte de combustion (5), un axe (2) de sensible symétrie desdites parois (1, 3) annulaires, des injecteurs de carburant (11) répartis en deux rangées (14a, 14b) concentriques autour de l'axe de symétrie (2) et disposés dans des orifices (10) ménagés dans le fond (4), lesdites deux rangées (14a, 14b) comportent le même nombre N d'injecteurs régulièrement répartis autour de l'axe de symétrie (2), lesdits injecteurs (11) de la rangée externe (14b) sont situés dans les mêmes plans longitudinaux (P1, P2) passant par l'axe de symétrie (2) que les injecteurs (11) de la rangée interne (14a), les injecteurs de la rangée interne (14a) et les injecteurs de la rangée externe (15) sont sensiblement équidistants de la sortie (6) de l'enceinte et leurs axes (15a, 15b) sont dirigés vers ladite sortie (6), les injecteurs (11) sont du type aéromécanique et équipés de bols (13), les injecteurs étant alimentés en carburant de façon permanente lors du fonctionnement de ladite chambre de combustion, des passages d'admission (17a, 17b, 17c) d'un air complémentaire répartis en un groupe interne (17a) situé entre la paroi annulaire interne (1) et les bols des injecteurs de la rangée interne (14a), un groupe externe situé entre la paroi annulaire externe (3) et les bols des injecteurs de la rangée externe (14b) et un groupe médian (17c) situé entre les bols des injecteurs de la rangée interne (14a) et les bols des injecteurs de la rangée externe (14b) et ménagés dans ledit fond (4), des trous primaires (18a, 18b) ménagés dans lesdites parois (1, 3) et destinés à introduire un débit d'air dans la zone primaire (19) de l'enceinte, des trous de dilution (20a, 20b) ménagés dans lesdites parois (1, 3) en aval des trous primaires (18a, 18b) et destinés à introduire de l'air dans la zone de dilution (21) de l'enceinte, et des orifices de refroidissement (21a, 21b) des parois de la zone de dilution, lesdites parois (1, 3) définissant en aval une sortie (6) annulaire pour l'évacuation des gaz de combustion hors de ladite enceinte (5), **caractérisée par le fait que**, en fonctionnement, les proportions d'air injecté sont sensiblement de 26% au niveau des injecteurs (11), 7,5% par les passages (17a, 17b, 17c), 22,3% par les trous primaires (18a, 18b), 24,7% par les trous de dilution (20a, 20b) et 19,5% par les orifices de refroidissement (21a, 21b), par rapport au débit total de l'air injecté dans l'enceinte et **par le fait que** les deux rangées d'injecteurs (14a, 14b) introduisent sensiblement la même quantité d'air et de carburant.

2. Chambre de combustion selon la revendication 1 **caractérisée par le fait que** la proportion d'air injecté par les passages est répartie de la manière suivante : sensiblement 1,6% du débit total est introduit par le groupe interne (17a) de passage, 3,5% par le groupe médian (17c) et 2,4% par le groupe externe (17b).

3. Chambre de combustion selon l'une des revendications 1 ou 2, **caractérisée par le fait que** le nombre de trous de dilution (20a, 20b) est égal au double du nombre de trous primaires (18a, 18b).

4. Chambre de combustion selon la revendication 3, **caractérisée par le fait que** le nombre de trous primaires (18a, 18b) dans chacune des parois (1) est égal au double du nombre d'injecteurs (11) de chaque rangée d'injecteurs (14a, 14b).

5. Chambre de combustion selon l'une quelconque des revendications 1 à 4, **caractérisée par le fait que** les trous de dilution (20a, 20b) ménagés dans une paroi annulaire (1, 3) sont situés dans un plan transversal (P5, P6) écarté du plan transversal (P3, P4) contenant les trous primaires (18a, 18b) de la même paroi, d'une distance (d1, d2) inférieure à la distance (D1, D2) séparant deux trous primaires adjacents (18a, 18b).

6. Chambre de combustion selon l'une quelconque des revendications 1 à 5, dans laquelle L indique la longueur de l'enceinte et H son épaisseur radiale maximale, **caractérisée par le fait que** le rapport de la longueur L sur l'épaisseur H est supérieur ou égal à 1,2.

## Patentansprüche

1. Brennkammer, die aufweist: zwei voneinander beabstandete Ringwände (1, 3), die vom durch einen Boden (4) verbunden sind und mit diesem zusammen einen Verbrennungsraum (5) bilden, eine Achse (2), die im wesentlichen eine Symmetrieachse dieser Ringwände (1, 3) ist, Brennstoffeinspritzdüsen (11), die in zwei um die Symmetrieachse (2) konzentrisch verlaufenden Reihen (14a, 14b) verteilt in Öffnungen (10) angeordnet sind, die im Boden (4) ausgeführt sind, wobei diese zwei Reihen (14a, 14b) die gleiche Anzahl N von Einspritzdüsen regelmäßig um die Symmetrieachse (2) verteilt aufweisen, wobei sich die genannten Einspritzdüsen (11) der äußeren Reihe (14b) in den gleichen, durch die Symmetrieachse (2) verlaufenden Längsebenen (P1, P2) befinden wie die Einspritzdüsen (11) der inneren Reihe (14a), wobei sich die Einspritzdüsen der inneren Reihe (14a) und die Einspritzdüsen der äußeren Reihe (14b) im wesentlichen im gleichen Abstand zu dem Auslass (6) des Verbrennungsraums befinden und ihre Achsen (15a, 15b) zu diesem Auslass (6) hin gerichtet sind, wobei die Einspritzdüsen (11) aeromechanische Düsen sind und mit Schalen (13) ausgestattet sind, wobei die Einspritzdüsen bei Betrieb der genannten Brennkammer ununterbrochen mit Brennstoff gespeist werden, und ferner aufweist: Zufuhrdurchlässe (17a, 17b, 17c) für zusätzliche Luft, die auf eine innere Gruppe (17a), die sich zwischen der inneren Ringwand (1) und den Schalen (13) der Einspritzdüsen (11) der inneren Reihe (14a) befindet, auf eine äußere Gruppe (17b), die sich zwischen der äußeren Ringwand (3) und den Schalen (13) der Einspritzdüsen (11) der äußeren Reihe (14b) befindet, und auf eine mittlere Gruppe (17c), die sich zwischen den Schalen (13) der Einspritzdüsen (11) der inneren Reihe (14a) und den Schalen (13) der Einspritzdüsen (11) der äußeren Reihe (14b) befindet, verteilt angeordnet und im Boden (4) ausgeführt sind, Primäröffnungen (18a, 18b), die in diesen Ringwänden (1, 3) ausgeführt und dazu vorgesehen sind, eine Luftmenge in den Primärbereich (19) des Verbrennungsraums einzuführen, Verdünnungsöffnungen (20a, 20b), die in diesen Ringwänden (1, 3) hinter den Primäröffnungen (18a, 18b) ausgeführt und dazu vorgesehen sind, eine Luftmenge in den Verdünnungsbereich (21) des Verbrennungsraums einzuführen, und Kühlungsöffnungen (21a, 21b) für die Wände des Verdünnungsbereichs, wobei die genannten Ringwände (1, 3) hinten einen ringförmigen Auslass (6) zum Entlassen der Verbrennungsgase aus diesem Verbrennungsraum (5) bilden,
**dadurch gekennzeichnet,**
**dass** bei Betrieb die Luft, bezogen auf den Gesamtdurchsatz der in den Verbrennungsraum eingespritzten Luft, im wesentlichen in den Anteilen von 26 % durch die Einspritzdüsen (11), von 7,5 % durch die Durchlässe (17a, 17b, 17c), von 22,3 % durch die Primäröffnungen (18a, 18b), von 24,7 % durch die Verdünnungsöffnungen (20a, 20b) und von 19,5 % durch die Kühlungsöffnungen (21 a, 21b) eingespritzt wird, und dass die beiden Reihen von Einspritzdüsen (14a, 14b) im wesentlichen die gleiche Menge Luft und Brennstoff einführen.

2. Brennkammer nach Anspruch 1,
**dadurch gekennzeichnet,**
**dass** das Verhältnis der durch die Durchlässe eingespritzten Luft folgendermaßen aufgeteilt ist: im wesentlichen 1,6 % der Gesamtmenge wird durch die innere Gruppe (17a) von Durchlässen eingeführt, 3,5 % wird durch die mittlere Gruppe (17c) eingeführt und 2,4 % wird durch die äußere Gruppe (17b) eingeführt.

3. Brennkammer nach einem der Ansprüche 1 oder 2,
**dadurch gekennzeichnet,**
**dass** die Anzahl der Verdünnungsöffnungen (20a, 20b) gleich groß oder doppelt so hoch ist wie die Anzahl der Primäröffnungen (18a, 18b).

4. Brennkammer nach Anspruch 3,
**dadurch gekennzeichnet,**
**dass** die Anzahl der Primäröffnungen (18a, 18b) in jeder Wand (1) gleich groß oder doppelt so hoch ist wie die Anzahl der Einspritzdüsen (11) jeder Reihe von Einspritzdüsen (14a, 14b).

5. Brennkammer nach einem der Ansprüche 1 bis 4,
**dadurch gekennzeichnet,**
**dass** die in einer Ringwand (1, 3) ausgeführten Verdünnungsöffnungen (20a, 20b) sich in einer Querebene (P5, P6) befinden, die von der die Primäröffnungen (18a, 18b) enthaltenden Querebene (P3, P4) der gleichen Wand um eine Distanz (d1, d2) beabstandet ist, die geringer ist als die Distanz (D1, D2) zwischen zwei benachbarten Primäröffnungen (18a, 18b).

6. Brennkammer nach einem der Ansprüche 1 bis 5, bei der L die Länge des Verbrennungsraums und H dessen maximale radiale Breite angibt,
**dadurch gekennzeichnet,**
**dass** die das Verhältnis der Länge L zu der Breite H größer oder gleich 1,2 ist.

## Claims

1. Combustion chamber comprising two mutually separated annular walls (1, 3) connected upstream by an end (4) and with the latter delimiting a combustion space (5), an axis (2) of almost symmetry of the said annular walls (1, 3), fuel injectors (11) split into two concentric rows (14a, 14b) around the axis of symmetry (2) and arranged in orifices (10) made in the end (4), the said two rows (14a, 14b) comprise the same number N of injectors uniformly distributed about the axis of symmetry (2), the said injectors (11) of the outer row (14b) are situated in the same longitudinal planes (P1, P2) passing through the axis of symmetry (2) as the injectors (11) of the inner row (14a), the injectors of the inner row (14a) and the injectors of the outer row (15) are more or less equidistant from the outlet (6) from the space and their axes (15a, 15b) are directed towards the said outlet (6), the injectors (11) are of the aeromechanical type and equipped with bowls (13), the injectors being supplied with fuel permanently when the said combustion chamber is operating, inlet passages (17a, 17b, 17c) for additional air which are split into an inner group (17a) situated between the inner annular wall (1) and the bowls of the injectors of the inner row (14a), an outer group situated between the outer annular wall (3) and the bowls of the injectors of the outer row (14b) and a middle group (17c) situated between the bowls of the injectors of the inner row (14a) and the bowls of the injectors of the outer row (14b) and made in the said end (4), primary holes (18a, 18b) made in the said walls (1, 3) and intended to introduce a flow of air into the primary region (19) of the space, dilution holes (20a, 20b) made in the said walls (1, 3) downstream of the primary holes (18a, 18b) and intended to introduce air into the dilution region (21) of the space, and orifices (21a, 21b) for cooling the walls of the dilution region, the said walls (1, 3) defining, downstream, an annular outlet (6) for discharging the combustion gases from the said space (5), **characterized in that**, during operation, the proportions of injected air are more or less 26% at the injectors (11), 7.5% through the passages (17a, 17b, 17c), 22.3% through the primary holes (18a, 18b), 24.7% through the dilution holes (20a, 20b) and 19.5% through the cooling orifices (21a, 21b) compared with the total flow of air injected into the space and **in that** the two rows of injectors (14a, 14b) introduce more or less the same amount of air as of fuel.

2. Combustion chamber according to Claim 1, **characterized in that** the proportion of air injected through the passages is distributed as follows: more or less 1.6% of the total flow is introduced through the inner passage group (17a), 3.5% through the middle group (17c) and 2.4% through the outer group (17b).

3. Combustion chamber according to Claim 1 or 2, **characterized in that** the number of dilution holes (20a, 20b) is equal to twice the number of primary holes (18a, 18b).

4. Combustion chamber according to Claim 3, **characterized in that** the number of primary holes (18a, 18b) in each of the walls (1) is equal to twice the number of injectors (11) in each row of injectors (14a, 14b).

5. Combustion chamber according to any of Claims 1 to 4, **characterized in that** the dilution holes (20a, 20b) made in one annular wall (1, 3) are situated in a transverse plane (P5, P6) separated from the transverse plane (P3, P4) containing the primary holes (18a, 18b) in the same wall by a distance (d1, d2) shorter than the distance (D1, D2) separating two adjacent primary holes (18a, 18b).

6. Combustion chamber according to any of Claims 1 to 5, in which L indicates the length of the space and H its maximum radial height, **characterized in that** the ratio of the length L to the height H is greater than or equal to 1.2.
